# EUROPEAN PATENT SPECIFICATION

(11) **EP 3 786 530 B1**
(45) Date of publication and mention of the grant of the patent: **13.12.2023**
(21) Application number: 20188025.9
(22) Date of filing: 28.07.2020
(51) Int. Cl.: F24C 14/00, F24C 15/00, A21B 3/04

(54) **A COOKING DEVICE**
KOCHVORRICHTUNG
DISPOSITIF DE CUISSON

(30) Priority: 02.09.2019 TR 201913181
(43) Date of publication of application: 03.03.2021
(73) Proprietor: Arçelik Anonim Sirketi, 34445 Istanbul (TR)
(72) Inventor: KUM, Yalcin, 34950 Istanbul (TR); KARAER, Erol, 34445 ISTANBUL (TR); SABAH, Fatih, 34950 Istanbul (TR); CENGIZ, Osman, 34950 ISTANBUL (TR); YIRMILI, Yasin Sedat, 34950 ISTANBUL (TR)

(56) References cited:
- DE-A1-102016 211 580
- DE-B3-102006 013 312
- DE-U1-202012 104 832
- US-A- 5 103 800
- US-A1- 2007 175 884

## Description

The present invention relates to a cooking device wherein the cooking chamber is in contact with water.

In ovens which are cooking devices, the foodstuff placed into the cooking chamber and cooked at high temperatures may spill into the cooking chamber, splatter to the walls of the cooking chamber and stick thereto. The cooking chamber becomes dirty because of the foodstuff, oil, etc. which stick to and dry on the walls of the cooking chamber. Removing the dirt which accumulates on the walls of the cooking chamber is a very laborious process. For the cleaning process high amount of time and energy is consumed, and said cleaning process damages the walls of the cooking chamber.

In the state of the art, various embodiments have been developed to clean the dirt accumulated in the cooking chamber.

In the state of the art International Patent Application No. WO2016059129, a cleaning device which automatically cleans the interior of the oven is disclosed. The cleaning device comprises a spray arm which moves by means of water pressure and the walls of the cooking chamber are washed using the pressurized water sprayed into the cooking chamber by means of the spray arms.

Another state of the art embodiment is United States Patent Application No. US2017045233. In this document, a rear wall is disclosed, having suction holes at the center thereof and blowing holes positioned on prismatic protrusions symmetrically formed next to said suction holes. Further prior art can be found in the documents DE102006013312 and US5103800A. J

Especially, cooking devices wherein the cooking chamber is in contact with water, such as ovens with washable cooking chambers and steam cooking ovens, or ovens with both these features have been widely used in recent years. In a state of the art cooking device having the above-mentioned features, in other words having a cooking chamber which is in contact with water, the end of the safety member which enables the water to quickly reach the safety mechanism in case of the overflowing of water or similar malfunction is open. During the washing process, the water which may splatter passes through said safety member with the end thereof being open and easily reaches the safety mechanism, and causes an error in the washing process although there is no malfunction.

The aim of the present invention is the realization of a cooking device wherein the safety mechanism is prevented from being unintentionally activated.

The cooking device realized in order to attain the aim of the present invention, explicated in the first claim and the respective claims thereof, comprises a safety member which is fixed to at least one wall of the cooking chamber and which opens into the cooking chamber from one end; a delivery pipe which is attached to the other end of the safety member; and a safety mechanism whereto the delivery pipe is connected. In this embodiment, the base, extending into the cooking chamber, of the cylindrical safety member is closed, and the safety member comprises an opening having an inlet which is arranged on the lateral wall thereof and which opens into the cooking chamber and an outlet which extends to the ceiling positioned opposite to the base. Thus, the water which may splatter is prevented from entering through the base of the safety member and the safety mechanism is prevented from being unintentionally activated.

By means of the opening having the inlet bored on the lateral wall of the safety member in a position close to the end of the safety member, the water which may splatter in the cooking chamber is prevented from entering the safety member and from reaching the safety mechanism through the delivery pipe, and thus the safety mechanism is prevented from being unintentionally activated.

According to the invention, the cooking device comprises a closed base which is arranged at the end, extending into the cooking chamber, of the safety member; a ceiling which opens outside the cooking chamber and where the delivery pipe is connected to the safety member and the water entering the safety member is transferred to the delivery pipe; and an opening having the inlet which opens into the cooking chamber, which is arranged between the base and the wall of the cooking chamber and which is bored on the lateral wall of the safety member and the outlet which extends along the safety member up to the ceiling and which opens into the delivery pipe.

In an embodiment of the present invention, the cooking device comprises a fixing platform which is disposed on the lateral wall of the safety member between the base and the ceiling thereof and which enables the safety member to be fixed to the wall of the cooking chamber, and a fixing hole which is arranged on the wall of the cooking chamber and which enables the safety member to be fixed to the cooking chamber. In the embodiment of the present invention, the safety member is fixed to the wall of the cooking chamber via the fixing platform by means of fixing members. In this embodiment, the safety member is inserted through the fixing hole on the wall of the cooking chamber from the outside of the cooking chamber until the fixing platform bears against the wall of the cooking chamber, and afterwards the safety member is fixed to the wall of the cooking chamber by means of fixing members. In this case, the base of the safety member and the inlet remain inside the cooking chamber while the ceiling of the safety member and the outlet remain outside the cooking chamber.

In another embodiment of the present invention, the cooking device comprises a sealing member which is disposed between the fixing platform and the wall of the cooking chamber. In this embodiment, the cooking device comprises a housing which is arranged on the fixing platform between the cooking chamber and the fixing platform and which enables the sealing member to be seated.

In an embodiment of the present invention, two safety members are fixed preferably to two opposite side walls of the cooking chamber.

By means of the present invention, the water which may splatter in the cooking chamber is prevented from reaching the safety mechanism through the safety member by means of the delivery pipe contrary to the state of the art component with the base being open, and causing errors. By eliminating the risk of the water unintentionally reaching the safety mechanism, the safety mechanism is prevented from being unnecessarily activated. Thus, customer complaints and service failure rates are decreased, improving the quality perception.

The cooking device realized in order to attain the aim of the present invention is illustrated in the attached figures, where:
Figure 1 - is the perspective view of a cooking device.
Figure 2 - is the exploded perspective view of a cooking device.
Figure 3 - is the top perspective view of safety member.
Figure 4 - is the sideways perspective view of safety member.
Figure 5 - is the top view of safety member.
Figure 6 - is the view of the cross-section A - A in Figure 5.

The elements illustrated in the figures are numbered as follows:
1. Cooking device
2. Cooking chamber
3. Safety mechanism
4. Delivery pipe
5. Safety member
6. Base
7. Ceiling
8. Opening
9. Inlet
10. Outlet
11. Lateral wall
12. Fixing hole
13. Fixing platform
14. Housing
15. Sealing member

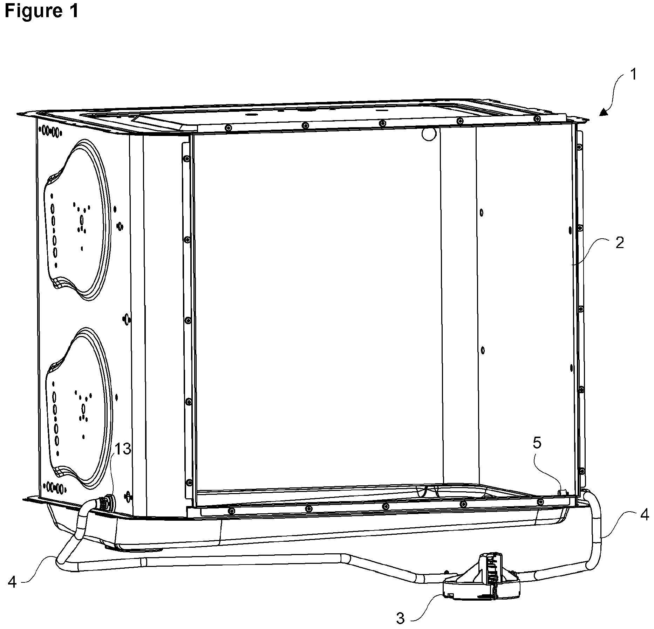

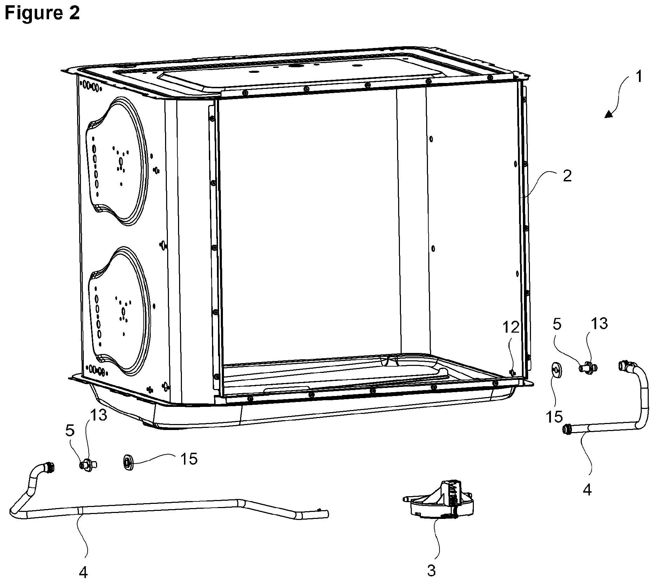

The cooking device (1) comprises a cooking chamber (2); a safety member (5) which is fixed to at least one wall of the cooking chamber (2) and which opens into the cooking chamber (2) from one end; a delivery pipe (4) which is attached to the other end of the safety member (5); and a safety mechanism (3) whereto the delivery pipe (4) is connected, the cooking device (1) further comprising a closed base (6) which is provided on the cylindrical safety member (5) and which extends into the cooking chamber (2); a ceiling (7) which is positioned opposite to the base (6); and an opening (8) having an inlet (9) which is arranged on the lateral wall (11) thereof and which opens into the cooking chamber (2) and an outlet (10) which extends from the inlet (9) to the ceiling (7) along the safety member (5) and which is arranged on the ceiling (7). Thus, the water which may splatter is prevented from entering through the base (6) of the safety member (5) and the safety mechanism (3) is prevented from being unintentionally activated (Figure 1 and Figure 2).

By means of the inlet (9) bored on the lateral wall (11) of the safety member (5) in a position close to the end, extending into the cooking chamber (2), of the safety member (5), the water which may splatter in the cooking chamber (2) is prevented from entering the safety member (5) by accident and from reaching the safety mechanism (3) through the delivery pipe (4), and thus the safety mechanism (3) is prevented from being unintentionally activated.

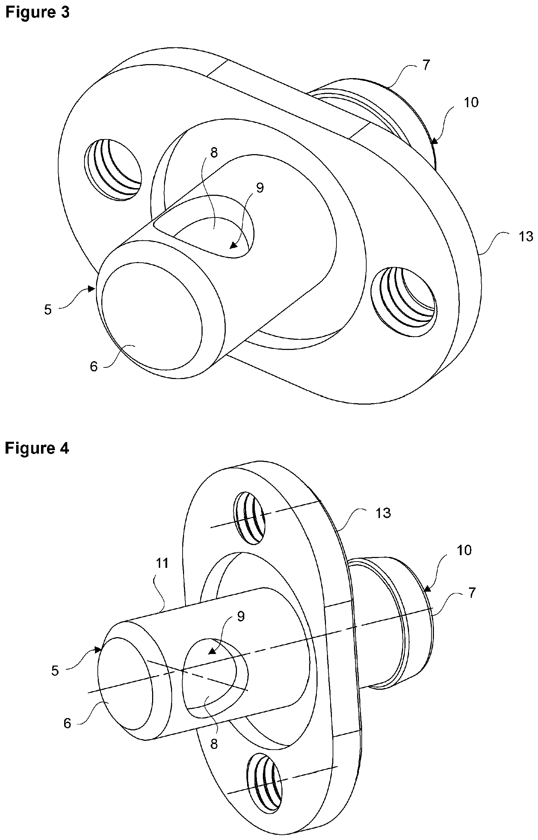

According to the invention, the cooking device (1) comprises a closed base (6) which is arranged at the end, extending into the cooking chamber (2), of the safety member (5); a ceiling (7) which opens outside the cooking chamber (2) and where the delivery pipe (4) is connected to the safety member (5) and the water entering the safety member (5) is transferred to the delivery pipe (4); and an opening (8) having an inlet (9) which opens into the cooking chamber (2), which is arranged between the base (8) and the wall of the cooking chamber (2) and which is bored on the lateral wall (121) of the safety member (5) and an outlet (10) which extends along the safety member (5) up to the ceiling (7) and which opens into the ceiling (7) where the delivery pipe (4) is connected to the safety member (5) (Figure 3 and Figure 4).

In an embodiment of the present invention, the cooking device (1) comprises a fixing platform (13) which is disposed on the lateral wall (11) of the safety member (5) between the base (6) and the ceiling (7) thereof and which enables the safety member (5) to be fixed to the wall of the cooking chamber (2), and a fixing hole (12) which is arranged on the wall of the cooking chamber (2) and which enables the safety member (5) to be fixed to the cooking chamber (2). In the embodiment of the present invention, the safety member (5) is fixed to the wall of the cooking chamber (2) via the fixing platform (13) by means of fixing members. In this embodiment, the safety member (5) is inserted through the fixing hole (12) on the wall of the cooking chamber (2) from the outside of the cooking chamber (2) until the fixing platform (13) bears against the wall of the cooking chamber (2), and afterwards the safety member (5) is fixed to the wall of the cooking chamber (2) by means of fixing members. In this case, the base (6) of the safety member (5) and the inlet (9) remain inside the cooking chamber (2) while the ceiling (7) of the safety member (5) and the outlet (10) remain outside the cooking chamber (2).

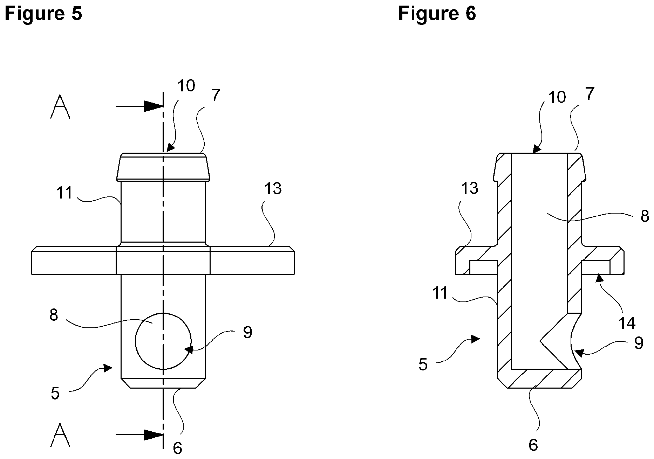

In another embodiment of the present invention, the cooking device (1) comprises a sealing member (15) which is disposed between the fixing platform (13) and the wall of the cooking chamber (2). In this embodiment, the cooking device (1) comprises a housing (14) which is arranged on the fixing platform (13) between the cooking chamber (2) and the fixing platform (13) and which enables the sealing member (15) to be seated (Figure 5 and Figure 6).

In an embodiment of the present invention, two safety members (5) are fixed preferably to two opposite side walls of the cooking chamber (2).

According to the invention, the safety member (5) is mounted to the wall of the cooking chamber (2) such that the inlet (9) faces the base of the cooking chamber (2).

By means of the present invention, the water which may splatter in the cooking chamber (2) is prevented from reaching the safety mechanism (3) through the safety member (5) by means of the delivery pipe (4) contrary to the state of the art component with the base being open, and causing errors. By eliminating the risk of the water unintentionally reaching the safety mechanism (3), the safety mechanism (3) is prevented from being unnecessarily activated. Thus, customer complaints and service failure rates are decreased, improving the quality perception.

## Claims

1. A cooking device (1) **comprising** a cooking chamber (2); a safety member (5) which is fixed to at least one wall of the cooking chamber (2) and which opens into the cooking chamber (2) from one end such that water accumulating in the cooking chamber (2) can enter through the safety member (5); a delivery pipe (4) which is connected to the safety member (5) for receiving and transferring water coming from the safety member (5); and a safety mechanism (3) whereto the other end of the delivery pipe (4) is connected, for detecting overflow of water from the cooking chamber (2) by being activated when water transferred by the delivery pipe (4) reaches on the safety mechanism (3), **characterized that** the safety member (5) comprises a closed base (6) which is provided at the end of the cylindrical safety member (5) and which extends into the cooking chamber (2); a ceiling (7) which is positioned opposite to the base (6); and opens outside the cooking chamber (2) an opening (8) having an inlet (9) which is arranged on the lateral wall (11) thereof and which opens into the cooking chamber (2) and an outlet (10) which extends from the inlet (9) to the ceiling (7) along the safety member (5) and which into the ceiling (7) where the delivery pipe (4) is connected to the safety member (5) and that the safety member (5) which is mounted to the wall of the cooking chamber (2) such that the inlet (9) faces the base of the cooking chamber (2).

2. A cooking device (1) as in Claim 1, **characterized by** the opening (8) is arranged between the base (6) and the wall of the cooking chamber (2) and which is bored on the lateral wall (11) of the safety member (5) .

3. A cooking device (1) as in Claim 2, **characterized by** a fixing platform (13) which is disposed on the lateral wall (11) of the safety member (5) between the base (6) and the ceiling (7) thereof and which enables the safety member (5) to be fixed to the wall of the cooking chamber (2), and a fixing hole (12) which is arranged on the wall of the cooking chamber (2) and which enables the safety member (5) to be fixed to the cooking chamber (2).

4. A cooking device (1) as in Claim 1 and 2, **characterized by** the safety member (5) wherein the base (6) thereof and the inlet (9) remain inside the cooking chamber (2) while the ceiling (7) thereof and the outlet (10) remain outside the cooking chamber (2).

5. A cooking device (1) as in claim 3, **characterized by** a sealing member (15) which is disposed between the fixing platform (13) and the wall of the cooking chamber (2).

6. A cooking device (1) as in Claim 5, **characterized by** a housing (14) which is arranged on the fixing platform (13) between the cooking chamber (2) and the fixing platform (13) and which enables the sealing member (15) to be seated.

7. A cooking device (1) as in any one of the above claims, **characterized by** two safety members (5) which are fixed to two opposite side walls of the cooking chamber (2).

## Patentansprüche

1. Ein Kochgerät (1) **umfasst** eine Kochkammer (2); ein Sicherheitselement (5), das an mindestens einer Wand der Kochkammer (2) befestigt ist und das sich von einem Ende her in die Kochkammer (2) öffnet, so dass sich in der Kochkammer (2) ansammelndes Wasser durch das Sicherheitselement (5) eintreten kann; eine Zufuhrleitung (4), die mit dem Sicherheitselement (5) verbunden ist, um vom Sicherheitselement (5) kommendes Wasser aufzunehmen und weiterzuleiten; und einen Sicherheitsmechanismus (3), an den das andere Ende der Zufuhrleitung (4) angeschlossen ist, um ein Überlaufen des Wassers aus dem Kochkammer (2) zu erkennen, indem er aktiviert wird, wenn von der Zufuhrleitung (4) übertragenes Wasser die Sicherheitsmechanismus (3) erreicht, **gekennzeichnet ist es dadurch**, dass das Sicherheitselement (5) einen geschlossenen Boden (6) aufweist, der am Ende des zylindrischen Sicherheitselements (5) vorgesehen ist und sich in die Kochkammer (2) erstreckt; eine Decke (7), die gegenüber dem Boden (6) positioniert ist; und außerhalb der Kochkammer (2) eine Öffnung (8) mit einem an dessen Seitenwand (11) angeordneten Einlass (9), der in die Kochkammer (2) mündet, und einem Auslass (10), der sich vom Einlass (9) entlang des Sicherheitselements (5) zur Decke (7) erstreckt und in die Decke (7) mündet, wo die Zufuhrleitung (4) mit dem Sicherheitselement (5) verbunden ist, und dass das Sicherheitselement (5), das an der Wand der Kochkammer (2) so angebracht ist, dass es sich in der Decke (7) befindet, mit dem Sicherheitselement (5) zur Decke (7) erstreckt und der dort in die Decke (7) mündet, wo die Zufuhrleitung (4) mit dem Sicherheitselement (5) verbunden ist, und dass das Sicherheitselement (5) so an der Wand des Kochkammers (2) angebracht ist, dass der Einlass (9) dem Boden des Kochkammers (2) zugewandt ist.

2. Ein Kochgerät (1), wie in Anspruch 1 aufgeführt, **ist dadurch gekennzeichnet, dass** die Öffnung (8) zwischen dem Boden (6) und der Wand des Kochkammers (2) angeordnet und in die Seitenwand (11) des Sicherungselements (5) gebohrt ist.

3. Ein Kochgerät (1), wie in Anspruch 2 aufgeführt, **ist dadurch gekennzeichnet, dass** eine Befestigungsplattform (13), die an der Seitenwand (11) des Sicherheitselements (5) zwischen dem Boden (6) und der Decke (7) desselben angeordnet ist und die Befestigung des Sicherheitselements (5) an der Wand des Kochraums (2) ermöglicht, und ein Befestigungsloch (12), das an der Wand des Kochraums (2) angeordnet ist und die Befestigung des Sicherheitselements (5) am Kochraum (2) ermöglicht.

4. Ein Kochgerät (1), wie in Anspruch 1 und 2 aufgeführt, **ist dadurch gekennzeichnet, dass** das Sicherheitselement (5), dessen Boden (6) und der Einlass (9) innerhalb des Kochraums (2) verbleiben, während dessen die Decke (7) und der Auslass (10) außerhalb des Kochraums (2) verbleiben.

5. Ein Kochgerät (1), wie in Anspruch 3 aufgeführt, **ist dadurch gekennzeichnet, dass** ein Dichtungselement (15) zwischen der Befestigungsplattform (13) und der Wand des Kochraums (2) angeordnet ist.

6. Ein Kochgerät (1), wie in Anspruch 5 aufgeführt, **ist dadurch gekennzeichnet, dass** ein Gehäuse (14) auf der Befestigungsplattform (13) zwischen dem Kochraum (2) und der Befestigungsplattform (13) angeordnet ist und das Aufsetzen des Dichtungselements (15) ermöglicht.

7. Ein Kochgerät (1), wie in einem der vorherigen Ansprüchen aufgeführt, **ist dadurch gekennzeichnet, dass** zwei Sicherheitselemente (5) an zwei gegenüberliegenden Seitenwänden des Kochraums (2) befestigt sind.

## Revendications

1. Un dispositif de cuisson (1) **comprenant** une chambre de cuisson (2) ; un élément de sécurité (5) qui est fixé à au moins une paroi de la chambre de cuisson (2) et qui s'ouvre dans la chambre de cuisson (2) à partir d'une extrémité de sorte que l'eau s'accumulant dans la chambre de cuisson (2) peut entrer par l'élément de sécurité (5) ; un tuyau d'alimentation (4) qui est connecté à l'élément de sécurité (5) pour recevoir et transférer l'eau provenant de l'élément de sécurité (5) ; et un mécanisme de sécurité (3) auquel l'autre extrémité du tuyau de refoulement (4) est raccordée, pour détecter le débordement de l'eau de la chambre de cuisson (2) en étant activé lorsque l'eau transférée par le tuyau de refoulement (4) atteint le mécanisme de sécurité (3), **caractérisé par le fait que** l'élément de sécurité (5) comprend une base fermée (6) qui est fournie à l'extrémité de l'élément de sécurité cylindrique (5) et qui s'étend à l'intérieur de la chambre de cuisson (2) ; un plafond (7) placé à l'opposé de la base (6) ; et débouche à l'extérieur de la chambre de cuisson (2) une ouverture (8) ayant une entrée (9) qui est disposée sur la paroi latérale (11) de celle-ci et qui débouche dans la chambre de cuisson (2) et une sortie (10) qui s'étend de l'entrée (9) au plafond (7) le long de l'élément de sécurité (5) et qui débouche dans le plafond (7) où le tuyau de refoulement (4) est raccordé à l'élément de sécurité (5) et que l'élément de sécurité (5) est raccordé au plafond (7) (5) et qui pénètre dans le plafond (7) où le tuyau de refoulement (4) est relié à l'élément de sécurité (5) et que l'élément de sécurité (5) est monté sur la paroi de la chambre de cuisson (2) de telle sorte que l'entrée (9) soit orientée vers la base de la chambre de cuisson (2).

2. Un dispositif de cuisson (1) selon la déclaration 1, **caractérisé par** l'ouverture (8) est disposée entre la base (6) et la paroi de la chambre de cuisson (2) et qui est percée sur la paroi latérale (11) de l'élément de sécurité (5) .

3. Un dispositif de cuisson (1) selon la déclaration 2, **caractérisé par** une plate-forme de fixation (13) qui est disposée sur la paroi latérale (11) de l'élément de sécurité (5) entre sa base (6) et son plafond (7) et qui permet de fixer l'élément de sécurité (5) à la paroi de la chambre de cuisson (2), et par un trou de fixation (12) qui est disposé sur la paroi de la chambre de cuisson (2) et qui permet de fixer l'élément de sécurité (5) à la chambre de cuisson (2).

4. Un dispositif de cuisson (1) comme dans les déclarations 1 et 2, **caractérisé par** l'élément de sécurité (5) dans lequel la base (6) et l'entrée (9) restent à l'intérieur de la chambre de cuisson (2) tandis que le plafond (7) et la sortie (10) restent à l'extérieur de la chambre de cuisson (2).

5. Un dispositif de cuisson (1) selon la déclaration 3, **caractérisé par** un élément d'étanchéité (15) qui est disposé entre la plateforme de fixation (13) et la paroi de la chambre de cuisson (2).

6. Un dispositif de cuisson (1) selon la déclaration 5, **caractérisé par** un logement (14) qui est disposé sur la plateforme de fixation (13) entre la chambre de cuisson (2) et la plateforme de fixation (13) et qui permet de mettre en place l'élément d'étanchéité (15).

7. Un dispositif de cuisson (1) selon l'une quelconque des déclarations précédentes, **caractérisé par** deux éléments de sécurité (5) qui sont fixés à deux parois latérales opposées de la chambre de cuisson (2).
